(19) Europäisches Patentamt
European Patent Office
Office européen des brevets

(11) EP 3 626 775 A1

(12) EUROPEAN PATENT APPLICATION
published in accordance with Art. 153(4) EPC

(43) Date of publication:
25.03.2020 Bulletin 2020/13

(21) Application number: 18802993.8

(22) Date of filing: 15.05.2018

(51) Int Cl.:
*C08L 23/08* (2006.01) *B32B 15/06* (2006.01)
*B32B 25/04* (2006.01) *C08K 3/06* (2006.01)
*C08K 5/548* (2006.01)

(86) International application number:
PCT/JP2018/018761

(87) International publication number:
WO 2018/212180 (22.11.2018 Gazette 2018/47)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 19.05.2017 JP 2017099870

(71) Applicant: **Sumitomo Chemical Company Limited**
**Tokyo 104-8260 (JP)**

(72) Inventors:
- **SAKAI Takashi**
**Ichihara-shi**
**Chiba 299-0195 (JP)**
- **NAKANO Sadayuki**
**Ichihara-shi**
**Chiba 299-0195 (JP)**

(74) Representative: **Winter, Brandl, Fürniss, Hübner, Röss, Kaiser, Polte - Partnerschaft mbB**
**Patent- und Rechtsanwaltskanzlei**
**Alois-Steinecker-Strasse 22**
**85354 Freising (DE)**

# (54) RUBBER COMPOSITION FOR DIRECT VULCANIZATION BONDING AND MOLDED METAL/RUBBER COMPOSITE

(57) Disclosed is a rubber composition for direct vulcanization bonding, comprising (A) an ethylene-α-olefin-based copolymer rubber comprising an ethylene unit and an α-olefin unit having 3 or more carbon atoms, (B) a silane coupling agent comprising a sulfur atom, and (C) a vulcanizing agent comprising sulfur. The content of the silane coupling agent is 2.7 to 12 parts by mass per 100 parts by mass of the ethylene-α-olefin-based copolymer rubber. This rubber composition is used for forming a molded rubber directly vulcanization bonded to a metal member.

**Fig.1**

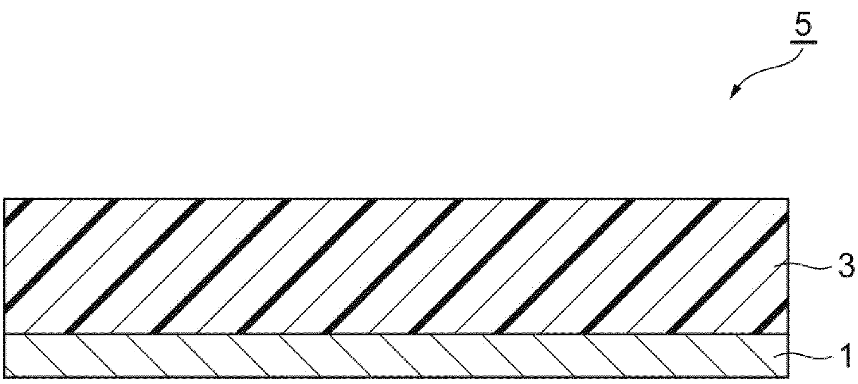




Printed by Jouve, 75001 PARIS (FR)

## Description

### Technical Field

The present invention relates to a rubber composition for direct vulcanization bonding and a molded metal/rubber composite.

### Background Art

Ethylene-α-olefin-based copolymer rubbers typified by ethylene-α-olefin copolymer rubbers and ethylene-α-olefin-non-conjugated polyene copolymer rubbers are excellent in functions such as weatherability, heat resistance, and chemical resistance and are widely used for applications such as automotive components, electrical and electronic components, and OA equipment parts.

In general, an ethylene-α-olefin-based copolymer rubber, of which the degree of saturation is low and which has no polar group or functional group in its molecular structure, is itself poor in adhesiveness with metal. Thus, in the case of bonding a molded rubber with a metal member, a method in which an adhesive is applied to a metal member in advance and an unvulcanized rubber is vulcanized and molded on the adhesive, a method in which an unvulcanized rubber comprising sulfur is vulcanized and molded on a surface of a brass-plated metal member to vulcanize the unvulcanized rubber and simultaneously form copper sulfate on the surface of the metal member, thereby the molded rubber is bonded to the metal member via sulfur (e.g., Non Patent Literature 1), and the like have been employed conventionally in order to improve the adhesive strength. As another technique to improve the adhesive strength, a method in which silicon-treated carbon black is used, as in Patent Literature 1, has been suggested.

However, the above methods require complicated processes such as surface treatment of metal or application of an adhesive, and thus, there has been a room for improvement in view of production efficiency. A problem of methods for applying an adhesive is that variations in the adhesive strength are likely to occur because uniform application is difficult. Moreover, adhesives generally contain an organic solvent as a solvent or dispersant, and thus, it is more desirable not to generally use an adhesive in respect of improvement in the working environment.

As a method for directly bonding a metal member with a molded rubber without via an adhesive, a method of directly vulcanization bonding a rubber composition containing zinc acrylate with a metal member has been reported as in Patent Literature 2.

### Citation List

#### Patent Literature

Patent Literature 1 Japanese Unexamined Patent Publication No. H11-505879
Patent Literature 2 Japanese Unexamined Patent Publication No. H5-311008

#### Non Patent Literature

Non Patent Literature 1 "Mutual Adhesion of Rubber with Metals", Journal of the Chemistry Society of Japan, Vol. 73, No. 1, 1970, p. 54

### Summary of Invention

#### Technical Problem

Although use of zinc acrylate can lead to high adhesive strength in the case of a rubber composition to be crosslinked with a peroxide, there had been a problem that zinc acrylate is not necessarily sufficiently effective for improvement in the adhesive strength in the case of a rubber composition to be crosslinked by sulfur vulcanization.

Accordingly, an aspect of the present invention aims to improve the adhesive strength between a metal member and a molded rubber in the case where a rubber composition to be crosslinked by sulfur vulcanization is used to form the molded rubber directly vulcanization bonded to the metal member.

## Solution to Problem

An aspect of the present invention provides a rubber composition comprising:

(A) an ethylene-α-olefin-based copolymer rubber having an ethylene unit and an α-olefin unit having 3 or more carbon atoms;
(B) a silane coupling agent comprising a sulfur atom; and
(C) a vulcanizing agent comprising sulfur. In this rubber composition, the content of the silane coupling agent comprising a sulfur atom is 2.7 to 12 parts by mass per 100 parts by mass of the ethylene-α-olefin-based copolymer rubber. This rubber composition is a rubber composition for direct vulcanization bonding to be used for forming a molded rubber directly vulcanization bonded to a metal member. In other words, an aspect of the present invention relates to use or application of the rubber composition described above for producing a molded metal/rubber composite, comprising a metal member and a molded rubber directly bonded to the metal member and including a vulcanized product of the rubber composition described above.

The rubber composition according to the present invention described above is a rubber composition to be crosslinked by sulfur vulcanization, the rubber composition enabling high adhesive strength between a metal member and a molded rubber to be achieved when the molded rubber directly vulcanization bonded to the metal member is formed.
Another aspect of the present invention provides a molded metal/rubber composite comprising a metal member and a molded rubber directly bonded to the metal member and including a vulcanized product of the rubber composition described above. This molded metal/rubber composite can be obtained by a production method comprising molding the rubber composition described above while in contact with a metal member to form a molded rubber directly bonded to the metal member and vulcanizing the rubber composition. In this molded metal/rubber composite, the molded rubber is bonded to the metal member with high adhesive strength.

## Advantageous Effects of Invention

According to one aspect of the present invention, in the case where a rubber composition to be crosslinked by sulfur vulcanization is used to form a molded rubber directly vulcanization bonded to a metal member, it is possible to improve the adhesive strength between the metal member and the molded rubber.

## Brief Description of Drawings

Figure 1 is a cross-sectional view showing an embodiment of a molded metal/rubber composite.

## Description of Embodiments

Hereinbelow, embodiments of the present invention will be described in detail. However, the present invention is not limited to the following embodiments.

### Rubber Composition

A rubber composition according to an embodiment comprises an ethylene-α-olefin-based copolymer rubber as a component (A), a silane coupling agent comprising a sulfur atom as a component (B), and a vulcanizing agent comprising sulfur as a component (C).

### Component (A): Ethylene-α-olefin-based copolymer rubber

The ethylene-α-olefin-based copolymer rubber as the component (A) according to an embodiment comprises an ethylene unit and an α-olefin unit having 3 or more carbon atoms as principal monomer units. The number of carbon atoms of the α-olefin unit may be 3 or more and 20 or less. The total content of the ethylene unit and α-olefin unit in the ethylene-α-olefin-based copolymer rubber may be 60% by mass or more and 100% by mass or less, or 80% by mass or more and 100% by mass or less, based on the total mass of the ethylene-α-olefin-based copolymer rubber. The term "monomer name + unit" herein such as "ethylene unit", "a-olefin unit", or "non-conjugated polyene unit" means a "monomer unit derived from the monomer".
Specific examples of the α-olefin constituting the ethylene-α-olefin-based copolymer rubber include linear olefins such as propylene, 1-butene, 1-pentene, 1-hexene, 1-heptene, 1-octene, 1-nonene, and 1-decene; branched chain olefins such as 3-methyl-1-butene, 3-methyl-1-pentene, and 4-methyl-1-pentene; and cyclic olefins such as vinylcyclohexane. These can, singly or in combinations of two or more, constitute the ethylene-a-olefin-based copolymer rubber. The α-olefin contained in the ethylene-α-olefin-based copolymer rubber as a monomer unit may be at least either one of propylene or 1-butene and may be propylene.

The mass ratio of the ethylene unit/α-olefin unit in the ethylene-α-olefin-based copolymer rubber is not particularly limited, and may be 90/10 to 30/70, or 85/15 to 45/55 provided that the total of the both is set to 100.

The ethylene-α-olefin-based copolymer rubber may be an ethylene-α-olefin-non-conjugated polyene copolymer rubber further comprising a non-conjugated polyene unit. The content of the non-conjugated polyene unit in the ethylene-a-olefin-based copolymer rubber may be 0 or more and 40 or less in terms of iodine value (unit: g/100 g of the ethylene-α-olefin-based copolymer rubber). When the content of the non-conjugated polyene unit is 40 or less in terms of iodine value, the weather resistance of the molded rubber may be more improved. From the same viewpoint, the content of the non-conjugated polyene unit may be 0 or more and 35 or less, or 0 or more and 30 or less, in terms of iodine value.

The number of carbon atoms of the non-conjugated polyene constituting the ethylene-α-olefin-based copolymer rubber may be 3 or more and 20 or less. Specific examples of the non-conjugated polyene include:

chain non-conjugated dienes such as 1,4-hexadiene, 1,6-octadiene, 2-methyl-1,5-hexadiene, 6-methyl-1,5-heptadiene, and 7-methyl-1,6-octadiene;

cyclic non-conjugated dienes such as cyclohexadiene, dicyclopentadiene, 5-vinylnorbornene, 5-ethylidene-2-norbornene, 5-(2-propenyl)-2-norbornene, 5-(3-butenyl)-2-norbornene, 5-(4-pentenyl)-2-norbornene, 5-(5-hexenyl)-2-norbornene, 5-(6-heptenyl)-2-norbornene, 5-(7-octenyl)-2-norbomene, 5-methylene-2-norbornene, and 6-chloromethyl-5-isopropenyl-2-norbornene; and

trienes such as 4-ethylidene-8-methyl-1,7-nonadiene, 5,9,13-trimethyl-1,4,8,12-tetradecadiene, 4-ethylidene-12-methyl-1,11-pentadecadiene, 2,3-diisopropylidene-5-norbornene, 2-ethylidene-3-isopropylidene-5-norbornene, 2-propenyl-2,2-norbornadiene, 1,3,7-octatriene, 6,10-dimethyl-1,5,9-undecatriene, 5,9-dimethyl-1,4,8-decatriene, 13-ethyl-9-methyl-1,9,12-pentadecatriene, 5,9,8,14,16-pentamethyl-1,7,14-hexadecatriene, and 1,4,9-decatriene. These can, singly or in combinations of two or more, constitute the ethylene-α-olefin-based copolymer rubber. Among them, the ethylene-α-olefin-based copolymer rubber may include 5-ethylidene-2-norbornene, dicyclopentadiene, 5-vinylnorbornene, or a combination thereof as a monomer unit.

The total content of the ethylene unit, α-olefin unit, and non-conjugated polyene unit in the ethylene-α-olefin-based copolymer rubber may be 60% by mass or more and 100% by mass or less, or 80% by mass or more and 100% by mass or less, based on the total mass of the ethylene-α-olefin-based copolymer rubber.

Specific examples of the ethylene-α-olefin-based copolymer rubber include ethylene-propylene-5-ethylidene-2-norbornene copolymer rubber, ethylene-propylene-dicyclopentadiene copolymer rubber, ethylene-propylene-1,4-hexadiene copolymer rubber, ethylene-propylene-1,6-octadiene copolymer rubber, ethylene-propylene-2-methyl-1,5-hexadiene copolymer rubber, ethylene-propylene-6-methyl-1,5-heptadiene copolymer rubber, ethylene-propylene-7-methyl-1,6-octadiene copolymer rubber, ethylene-propylene-cyclohexadiene copolymer rubber, ethylene-propylene-5-vinylnorbornene copolymer rubber, ethylene-propylene-5-(2-propenyl)-2-norbornene copolymer rubber, ethylene-propylene-5-(3-butenyl)-2-norbornene copolymer rubber, ethylene-propylene-5-(4-pentenyl)-2-norbornene copolymer rubber, ethylene-propylene-5-(5-hexenyl)-2-norbornene copolymer rubber, ethylene-propylene-5-(6-heptenyl)-2-norbornene copolymer rubber, ethylene-propylene-5-(7-octenyl)-2-norbornene copolymer rubber, ethylene-propylene-5-methylene-2-norbornene copolymer rubber, ethylene-propylene-4-ethylidene-8-methyl-1,7-nonadiene copolymer rubber, ethylene-propylene-5,9,13-trimethyl-1,4,8,12-tetradecadiene copolymer rubber, ethylene-propylene-4-ethylidene-12-methyl-1,11-pentadecadiene copolymer rubber, ethylene-propylene-6-chloromethyl-5-isopropenyl-2-norbornene copolymer rubber, ethylene-propylene-2,3-diisopropylidene-5-norbornene copolymer rubber, ethylene-propylene-2-ethylidene-3-isopropylidene-5-norbornene copolymer rubber, ethylene-propylene-2-propenyl-2,2-norbornadiene copolymer rubber, ethylene-propylene-1,3,7-octatriene copolymer rubber, ethylene-propylene-6,10-dimethyl-1,5,9-undecatriene copolymer rubber, ethylene-propylene-5,9-dimethyl-1,4,8-decatriene copolymer rubber, ethylene-propylene-13-ethyl-9-methyl-1,9,12-pentadecatriene copolymer rubber, ethylene-propylene-5,9,8,14,16-pentamethyl-1,7,14-hexadecatriene copolymer rubber, and ethylene-propylene-1,4,9-decatriene copolymer rubber. These may be used singly or in combinations of two or more.

The rubber composition may include ethylene-propylene-5-ethylidene-2-norbornene copolymer rubber, ethylene-propylene-dicyclopentadiene copolymer rubber, ethylene-propylene-5-vinylnorbornene copolymer rubber, or a combination thereof, or may include ethylene-propylene-5-ethylidene-2-norbornene copolymer rubber, as the ethylene-α-olefin-based copolymer rubber.

In the case where the rubber composition includes two types or more of ethylene-α-olefin-based copolymer rubber, the mass ratio and the iodine value of the aforementioned ethylene unit/α-olefin unit are each a value in the entirety of these two or more types of ethylene-α-olefin-based copolymer rubber.

The Mooney viscosity of the ethylene-α-olefin-based copolymer rubber at 100°C (ML 1 + 4, 100°C) may be 10

to 350, or 30 to 300. When the Mooney viscosity is excessively small, the mechanical strength of the molded rubber may decrease, and when the Mooney viscosity is excessively large, kneading processability tends to decrease.

The molecular weight distribution (Mw/Mn) of the ethylene-α-olefin-based copolymer rubber may be 1.5 or more and 10 or less. When the molecular weight distribution is 1.5 or more, favorable roll processability of the rubber composition is easily obtainable. When the molecular weight distribution is 10 or less, the mechanical properties of a molded article tends to improve. From the same viewpoint, the molecular weight distribution of the ethylene-α-olefin-based copolymer rubber may be 2.0 or more and 7.0 or less. The molecular weight distribution can be adjusted by changing polymerization conditions.

The molecular weight distribution herein is a ratio (Mw/Mn) calculated from the weight average molecular weight (Mw) and the number average molecular weight (Mn) measured using gel permeation chromatography (GPC method) in terms of standard polystyrene. Measurement conditions for the weight average molecular weight and the number average molecular weight by the GPC method are, for example, as follows.

- GPC apparatus: trade name HLC-8121GPC/HT manufactured by Tosoh Corporation
- Column: trade name TSKgel GMHHR-H(S)HT manufactured by Tosoh Corporation
- Molecular weight standard substance: polystyrene of which molecular weight is 500 or more and 20000000 or less
- Elution solvent flow rate: 1.0 mL/min
- Sample concentration:1 mg/mL
- Measurement temperature: 140°C
- Elution solvent: orthodichlorobenzene
- Amount to be injected: 500 μL
- Detector: differential refractometer

The content of the ethylene-α-olefin-based copolymer rubber in the rubber composition may be 20% by mass or more, or 35% by mass or more, based on the mass of the rubber composition. When the total mass of the component (A), the component (B), and the component (C) is set to 100% by mass, the content of the ethylene-α-olefin-based copolymer rubber as the component (A) may be 75% by mass or more, or 85% by mass or more.

A method for producing the ethylene-α-olefin-based copolymer rubber is not particularly limited, and the ethylene-α-olefin-based copolymer rubber, for example, can be produced by a method including a step of copolymerizing a monomer mixture including ethylene, α-olefin, and as necessary, non-conjugated polyene in the presence of a catalyst such as a so-called Ziegler-Natta catalyst or a metallocene catalyst.

As the catalyst for copolymerization, a catalyst formed from a vanadium compound represented by the following formula (1) and an organoaluminum compound represented by the following formula (2) may be used:

$$VO(OR)_mX_{3-m} \quad (1)$$

wherein R represents a linear hydrocarbon group having 1 or more and 8 or less carbon atoms is, X represents a halogen atom, and m represents a number satisfying $0 < m \leq 3$.

$$R"_jAlX"_{3-j} \quad (2)$$

wherein R" represents a hydrocarbon group, X" represents a halogen atom, and j represents a number satisfying $0 < j \leq 3$.

Specific examples of R in the formula (1) include a methyl group, an ethyl group, a n-propyl group, a n-butyl group, a n-pentyl group, and a n-hexyl group. Among them, R may be a linear alkyl group having 1 or more and 3 or less carbon atoms. Examples of X include a fluorine atom and a chlorine atom. m may be a number satisfying $1 \leq m \leq 2$.

Specific examples of the vanadium compound represented by the formula (1) include $VO(OCH_3)Cl_2$, $VO(OC_2H_5)Cl_2$, $VO(O(n\text{-}C_3H_7))Cl_2$, $VO(O(n\text{-}C_4H_9))Cl_2$, $VO(O(n\text{-}C_5H_{11}))Cl_2$, $VO(O(n\text{-}C_6H_{13}))Cl_2$, $VO(O(n\text{-}C_7H_{15}))Cl_2$, $VO(O(n\text{-}C_8H_{17}))Cl_2$, $VO(OCH_3)_{0.5}Cl_{2.5}$, $VO(OC_2H_5)_{0.5}Cl_{2.5}$, $VO(O(n\text{-}C_3H_7))_{0.5}Cl_{2.5}$, $VO(O(n\text{-}C_4H_9))_{0.5}Cl_{2.5}$, $VO(O(n\text{-}C_5H_{11}))_{0.5}Cl_{2.5}$, $VO(O(n\text{-}C_6H_{13}))_{0.5}Cl_{2.5}$, $VO(O(n\text{-}C_7H_{15}))_{0.5}Cl_{2.5}$, $VO(O(n\text{-}C_8H_{17}))_{0.5}Cl_{2.5}$, $VO(OCH_3)_{1.5}Cl_{1.5}$, $VO(OC_2H_5)_{1.5}Cl_{1.5}$, $VO(O(n\text{-}C_3H_7))_{1.5}Cl_{1.5}$, $VO(O(n\text{-}C_4H_9))_{1.5}Cl_{1.5}$, $VO(O(n\text{-}C_5H_{11}))_{1.5}Cl_{1.5}$, $VO(O(n\text{-}C_6H_{13}))_{1.5}Cl_{1.5}$, $VO(O(n\text{-}C_7H_{15}))_{1.5}Cl_{1.5}$, $VO(O(n\text{-}C_8H_{17}))_{1.5}Cl_{1.5}$, $VO(OCH_3)_{0.8}Cl_{2.2}$, $VO(OC_2H_5)_{0.8}Cl_{2.2}$, $VO(O(n\text{-}C_3H_7))_{0.8}Cl_{2.2}$, $VO(O(n\text{-}C_4H_9))_{0.8}Cl_{2.2}$, $VO(O(n\text{-}C_5H_{11}))_{0.8}Cl_{2.2}$, $VO(O(n\text{-}C_6H_{13}))_{0.8}Cl_{2.2}$, $VO(O(n\text{-}C_7H_{15}))_{0.8}Cl_{2.2}$, and $VO(O(n\text{-}C_8H_{17}))_{0.8}Cl_{2.2}$, $VO(OCH_3)_{1.8}Cl_{1.2}$, $VO(OC_2H_5)_{1.8}Cl_{1.2}$, $VO(O(n\text{-}C_3H_7))_{1.8}Cl_{1.2}$, $VO(O(n\text{-}C_4H_9))_{1.8}Cl_{1.2}$, $VO(O(n\text{-}C_5H_{11}))_{1.8}Cl_{1.2}$, $VO(O(n\text{-}C_6H_{13}))_{1.8}Cl_{1.2}$, $VO(O(n\text{-}C_7H_{15}))_{1.8}Cl_{1.2}$, and $VO(O(n\text{-}C_8H_{17}))_{1.8}Cl_{1.2}$. Among them, the vanadium compound may be $VO(OC_2H_5)Cl_2$, $VO(OC_2H_5)_{0.5}Cl_{2.5}$, $VO(OC_2H_5)_{1.5}Cl_{1.5}$, $VO(OC_2H_5)_{0.8}Cl_{2.2}$, or $VO(OC_2H_5)_{1.8}Cl_{1.2}$. These may be used singly or in combinations.

The vanadium compound represented by the formula (1) is obtained, for example, by a method of allowing $VOX_3$ react with ROH at a predetermined molar ratio. For example, the reaction of $VOCl_3$ and $C_2H_5OH$ is represented

by the following formula. $VOX_3$ and ROH may be supplied to a polymerization vessel to produce the vanadium compound represented by the formula (1) in the polymerization vessel.

$$VOCl_3 + m \cdot C_2H_5OH \rightarrow VO(OC_2H_5)_mCl_{3-m} + m \cdot HCl$$

R" in the formula (2) may be an alkyl group having 1 to 10 carbon atoms, and specific examples thereof include a methyl group, an ethyl group, a n-propyl group, an iso-propyl group, a n-butyl group, an iso-butyl group, a pentyl group, and a hexyl group. Examples of X" include a fluorine atom and a chlorine atom. j may be a number satisfying $0 < j \leq 2$.

Specific examples of the organoaluminum compound represented by the formula (2) include $(C_2H_5)_2AlCl$, $(n-C_4H_9)_2AlCl$, $(iso-C_4H_9)_2AlCl$, $(n-C_6H_{13})_2AlCl$, $(C_2H_5)_{1.5}AlCl_{1.5}$, $(n-C_4H_9)_{1.5}AlCl_{1.5}$, $(iso-C_4H_9)_{1.5}AlCl_{1.5}$, $(n-C_6H_{13})_{1.5}AlCl_{1.5}$, $C_2H_5AlCl_2$, $(n-C_4H_9)AlCl_2$, $(iso-C_4H_9)AlCl_2$, and $(n-C_6H_{13})AlCl_2$. Among them, the organoaluminum compound may be $(C_2H_5)_2AlCl$, $(C_2H_5)_{1.5}AlCl_{1.5}$, or $C_2H_5AlCl_2$. These may be used singly or in combinations.

The molar ratio of the amount of the organoaluminum compound of the formula (2) used to the amount of the vanadium compound of the formula (1) used (moles of the organoaluminum compound/moles of vanadium compound) may be 0.1 or more and 50 or less, 1 or more and 30 or less, 2 or more and 15 or less, or 3 or more and 10 or less. The viscosity, Mw/Mn, and the like of the ethylene-$\alpha$-olefin-based copolymer rubber can be adjusted by adjusting the molar ratio. For example, when the molar ratio is high, the viscosity of the ethylene-$\alpha$-olefin-based copolymer rubber tends to increase and Mw/Mn tends to decrease.

The polymerization reaction can be performed, for example, by a polymerization method using one polymerization vessel or a method using two polymerization vessels coupled in series. A monomer, a catalyst, and as necessary, other components are supplied to a polymerization vessel, and then the monomer can be polymerized in the polymerization vessel.

The polymerization reaction is generally performed in a solvent. Examples of the solvent used in the polymerization include inert solvents such as aliphatic hydrocarbons such as propane, butane, isobutane, pentane, hexane, heptane, and octane; and alicyclic hydrocarbons such as cyclopentane and cyclohexane. These may be used singly or in combinations. Among them, the solvent may be an aliphatic hydrocarbon.

The polymerization temperature may be usually 0°C or more and 200°C or less, 20°C or more and 150°C or less, or 30°C or more and 120°C or less. The polymerization pressure may be usually 0.1 MPa or more and 10 MPa or less, 0.1 MPa or more and 5 MPa or less, or 0.1 MPa or more and 3 MPa or less. The Mw/Mn and the like of the component (A) may be adjusted by adjusting the polymerization temperature. For example, when the polymerization temperature is low, Mw/Mn tends to decrease.

On polymerization, as required, hydrogen may be supplied as a molecular weight regulator to a polymerization vessel. The amount of hydrogen supplied to the polymerization vessel may be 0.001 to 0.1 NL, 0.005 to 0.05 NL, or 0.01 to 0.04 NL per 1 kg of a solvent supplied to the polymerization vessel. The Mw/Mn, viscosity, and the like of the ethylene-$\alpha$-olefin copolymer can be adjusted by adjusting the amount of hydrogen supplied. For example, when the amount of hydrogen supplied is large, Mw/Mn tends to decrease. When the amount of hydrogen supplied is small, the viscosity tends to increase.

The amount of the vanadium compound supplied to the polymerization vessel may be 0.002 parts by mass or more and 0.2 parts by mass or less, or 0.003 parts by mass or more and 0.1 parts by mass or less, per 100 parts by mass of the solvent supplied to the polymerization vessel. The viscosity of the ethylene-$\alpha$-olefin-based copolymer rubber can be adjusted by adjusting the amount of the vanadium compound with respect to the solvent. For example, there is a tendency that the viscosity can increase by increasing the amount of the vanadium compound.

Component (B): Silane coupling agent comprising a sulfur atom

The silane coupling agent as the component (B) is not particularly limited as long as the silane coupling agent comprises a sulfur atom and has an organic group bonded to a silicon atom, and typically contains two or more sulfur atoms sequentially bonded in series. It is conceived that the reaction of radical species formed by cleavage of bonding between the sulfur atoms contributes to improvement in the adhesive strength.

The silane coupling agent comprising a sulfur atom can be, for example, one or more compounds represented by the following formula (1).

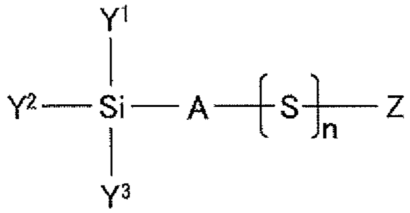

(1)

In the formula, n represents a numerical value of 1 or more. n may be 2 to 6 as an average.

$Y^1$, $Y^2$, and $Y^3$ each independently represent a hydrogen atom, a halogen atom, a hydroxyl group, an amino group, an alkoxy group optionally having a substituent, an alkyl group optionally having a substituent, an alkenyl group optionally having a substituent, an alkynyl group optionally having a substituent, an aryl group optionally having a substituent, or an aralkyl group optionally having a substituent. The silane coupling agent having a silyl group substituted by these groups may easily form interaction or chemical bonding with a metal surface and contribute particularly to improvement in the adhesive strength. At least one of $Y^1$, $Y^2$, and $Y^3$ may be a hydrogen atom, a halogen atom, a hydroxyl group, an amino group, or an alkoxy group optionally having a substituent. Examples of the alkoxy group can include a methoxy group, an ethoxy group, a n-propoxy group, an isopropoxy group, a n-butoxy group, a sec-butoxy group, a tert-butoxy group, a n-pentyloxy group, a n-hexyloxy group, a n-octyloxy group, a n-dodecyloxy group, a cyclopentyloxy group, cyclohexyloxy group, a phenoxy group, and a benzyloxy group. Examples of the alkyl group can include a methyl group, an ethyl group, a n-propyl group, an isopropyl group, a n-butyl group, a sec-butyl group, a tert-butyl group, a n-pentyl group, a n-hexyl group, a n-octyl group, a n-dodecyl group, a cyclopentyl group, and a cyclohexyl group. Examples of the alkenyl group can include a vinyl group, an allyl group, a 1-propenyl group, and an isopropenyl group. Examples of the alkynyl group can include an ethynyl group and a 2-propynyl group. Examples of the aryl group can include a phenyl group, a methylphenyl group, an ethylphenyl group, a benzyl group, a tolyl group, and a xylyl group. Examples of the aralkyl group can include a benzyl group. A substituent to be bonded to these can be, for example, at least one selected from a halogen atom, a hydroxy group, a formyl group, an acyl group, a carboxy group, an amino group, a nitro group, a cyano group, an imidazole group, and a sulfo group.

A represents a carbon linear or branched alkylene group. Examples of the alkylene group can include a methylene group, an ethylene group, a n-propylene group, an isopropylene group, a cyclopropylene group, a n-butylene group, an isobutylene group, a sec-butylene group, a tert-butylene group, a cyclobutylene group, a 1-methyl-cyclopropylene group, a 2-methyl-cyclopropylene group, a n-pentylene group, a 1-methyl-n-butylene group, a 2-methyl-n-butylene group, a 3-methyl-n-butylene group, a 1,1-dimethyl-n-propylene group, a 1,2-dimethyl-n-propylene group, a 2,2-dimethyl-n-propylene group, a 1-ethyl-n-propylene group, a cyclopentylene group, a 1-methyl-cyclobutylene group, a 2-methyl-cyclobutylene group, a 3-methyl-cyclobutylene group, a 1,2-dimethyl-cyclopropylene group, a 2,3-dimethyl-cyclopropylene group, a 1-ethyl-cyclopropylene group, a 2-ethyl-cyclopropylene group, a n-hexylene group, a 1-methyl-n-pentylene group, a 2-methyl-n-pentylene group, a 3-methyl-n-pentylene group, a 4-methyl-n-pentylene group, a 1,1-dimethyl-n-butylene group, a 1,2-dimethyl-n-butylene group, a 1,3-dimethyl-n-butylene group, a 2,2-dimethyl-n-butylene group, a 2,3-dimethyl-n-butylene group, a 3,3-dimethyl-n-butylene group, a 1-ethyl-n-butylene group, a 2-ethyl-n-butylene group, a 1,1,2-trimethyl-n-propylene group, a 1,2,2-trimethyl-n-propylene group, a 1-ethyl-1-methyl-n-propylene group, a 1-ethyl-2-methyl-n-propylene group, and a cyclohexylene group.

Z represents $-A-SiY^1Y^2Y^3$, a hydrogen atom, a halogen atom, a formyl group, an acyl group, a carboxy group, an amino group, a nitro group, an imidazole group, a sulfo group, an alkyl group optionally having a substituent, an alkenyl group optionally having a substituent, an alkynyl group optionally having a substituent, an aryl group optionally having a substituent, or an aralkyl group optionally having a substituent. A, $Y^1$, $Y^2$, and $Y^3$ in $-A-SiY^1Y^2Y^3$ are defined as are A, $Y^1$, $Y^2$, and $Y^3$ in the formula (1). Examples of the alkyl group can include a methyl group, an ethyl group, a n-propyl group, an isopropyl group, a n-butyl group, a sec-butyl group, a tert-butyl group, a n-pentyl group, a n-hexyl group, a n-octyl group, a n-dodecyl group, a cyclopentyl group, and a cyclohexyl group. Examples of the alkenyl group can include a vinyl group, an allyl group, a 1-propenyl group, and an isopropenyl group. Examples of the alkynyl group can include an ethynyl group and a 2-propynyl group. Examples of the aryl group can include a phenyl group, a methylphenyl group, an ethylphenyl group, a benzyl group, a tolyl group, and a xylyl group. Examples of the aralkyl group can include a benzyl group. A substituent to be bonded to these can be, for example, at least one selected from a halogen atom, a hydroxy group, a formyl group, an acyl group, a carboxy group, an amino group, a nitro group, an imidazole group, and a sulfo group.

Specific examples of the compound represented by the formula (1) include bis(3-triethoxysilylpropyl)tetrasulfide, bis(3-trimethoxysilylpropyl)tetrasulfide, bis(3-methyldimethoxysilylpropyl)tetrasulfide, bis(2-triethoxysilylethyl)tetrasulfide, bis(3-triethoxysilylpropyl)disulfide, bis(3-trimethoxysilylpropyl)disulfide, bis(3-methyldimethoxysilylpropyl)disulfide, bis(2-triethoxysilylethyl)disulfide, bis(3-triethoxysilylpropyl)trisulfide, bis(3-trimethoxysilylpropyl)trisulfide, bis(3-methyldimethoxysilylpropyl)trisulfide, bis(2-triethoxysilylethyl)trisulfide, bis(3-monoethoxydimethylsilylpropyl)tetrasulfide, bis(3-monoethoxydimethylsilylpropyl)trisulfide, bis(3-monoethoxydimethylsilylpropyl)disulfide, bis(3-monomethoxydimethylsilylpropyl)tetrasulfide, bis(3-monomethoxydimethylsilylpropyl)trisulfide, bis(3-monomethoxydimethylsilylpropyl)disulfide, bis(2-monoethoxydimethylsilylethyl)tetrasulfide, bis(2-monoethoxydimethylsilylethyl)trisulfide, and bis(2-monoethoxydimethylsilylethyl)disulfide. These may be used singly or in combinations of two or more.

As commercially available products of the silane coupling agent comprising a sulfur atom, there are Si75 (bis(3-triethoxysilylpropyl)disulfide) manufactured by Evonik Degussa Corporation and Si69 (bis(3-triethoxysilylpropyl)tetrasulfide) manufactured by Evonik Degussa Corporation.

The content of the silane coupling agent comprising a sulfur atom in the rubber composition may be typically 2.7 to 12 parts by mass, 3.5 to 9.0 parts by mass per 100 parts by mass of the ethylene-α-olefin-based copolymer rubber. When the content of the silane coupling agent comprising a sulfur atom is high, the adhesiveness of the molded rubber to the metal member tends to improve. When the content of the silane coupling agent comprising a sulfur atom is excessively high, the adhesiveness of the molded rubber to the metal member tends to decrease.

Component (C): Vulcanizing agent comprising sulfur

Sulfur used as the vulcanizing agent is not particularly limited, and may be powder sulfur, precipitated sulfur, colloidal sulfur, surface-treated sulfur, or insoluble sulfur. The content of the sulfur in the rubber composition may be 0.01 to 10 parts by mass, or 0.1 to 5 parts by mass, per 100 parts by mass of the ethylene-α-olefin-based copolymer rubber.

Other Components

The rubber composition of the present embodiment can further contain other components in addition to the components described above, within the range in which the effects of the present invention are not significantly impaired. Examples of the other components include a reinforcing agent, softening agent, vulcanization accelerator, vulcanization aid, processing aid, and a rubber component other than the ethylene-α-olefin-based copolymer rubber described above.

Examples of the reinforcing agent include various types of carbon black such as SRF, GPF, FEF, MAF, ISAF, SAF, FT, and MT, calcium carbonate, mica, magnesium silicate, aluminum silicate, lignin, aluminum hydroxide, and magnesium hydroxide. These may be used singly or in combinations of two or more. The content of the reinforcing agent in the rubber composition may be 200 parts by mass or less, or 150 parts by mass or less, per 100 parts by mass of the ethylene-α-olefin-based copolymer rubber.

Examples of the softening agent include paraffin-based oils such as process oils, lubricating oils, paraffin, and liquid paraffin, naphthene-based oils, petroleum asphalt, petrolatum, coal tar pitch, castor oil, linseed oil, factice, beeswax, and ricinoleic acid. These may be used singly or in combinations of two or more. The content of the softening agent in the rubber composition may be 100 parts by mass or less, or 70 parts by mass or less, per 100 parts by mass of the ethylene-α-olefin-based copolymer rubber.

Examples of the vulcanization accelerator include tetramethylthiuram monosulfide, tetramethylthiuram disulfide, tetraethylthiuram disulfide, tetrabutylthiuram disulfide, dipentamethylenethiuram monosulfide, dipentamethylenethiuram disulfide, dipentamethylenethiuram tetrasulfide, N,N'-dimethyl-N,N'-diphenylthiuram disulfide, N,N'-dioctadecyl-N,N'-diisopropylthiuram disulfide, N-cyclohexyl-2-benzothiazole-sulfenamide, N-oxydiethylene-2-benzothiazole-sulfenamide, N,N-diisopropyl-2-benzothiazolesulfenamide, 2-mercaptobenzothiazole, 2-(2,4-dinitrophenyl)mercaptobenzothiazole, 2-(2,6-diethyl-4-morpholinothio)benzothiazole, dibenzothiazyl disulfide, diphenylguanidine, triphenylguanidine, diorthotolylguanidine, orthotolyl-bi-guanide, diphenylguanidine-phthalate, n-butylaldehydeaniline, hexamethylenetetramine, acetaldehyde ammonia, 2-mercaptoimidazoline, thiocarbanilide, diethylthiourea, dibutylthiourea, trimethylthiourea, diorthotolylthiourea, zinc dimethyldithiocarbamate, zinc diethylthiocarbamate, zinc di-n-butyldithiocarbamate, zinc ethylphenyldithiocarbamate, zinc butylphenyldithiocarbamate, sodium dimethyldithiocarbamate, selenium dimethyldithiocarbamate, tellurium diethyldithiocarbamate, zinc dibutylxanthogenate, and ethylene thiourea. These may be used singly or in combinations of two or more. The content of the vulcanization accelerator in the rubber composition may be 0.05 parts by mass or more and 20 parts by mass or less, or 0.1 parts by mass or more and 8 parts by mass or less, per 100 parts by mass of the ethylene-α-olefin-based copolymer rubber.

Examples of the processing aid include fatty acids such as oleic acid, palmitic acid, and stearic acid; fatty acid metal salts such as zinc laurate, zinc stearate, barium stearate, and calcium stearate; fatty acid esters; and glycols such as ethylene glycol and polyethylene glycol. These may be used singly or in combinations. The content of the processing aid in the rubber composition may be 0.2 parts by mass or more and 10 parts by mass or less, or 0.3 parts by mass or more and 8 parts by mass or less, per 100 parts by mass of the ethylene-α-olefin-based copolymer rubber.

Examples of the rubber component other than the ethylene-α-olefin-based copolymer rubber include natural rubber, isoprene rubber, butadiene rubber, styrene butadiene rubber, and butyl rubber. The content of the rubber component other than the ethylene-α-olefin-based copolymer rubber in the rubber composition may be 10 parts by mass or

more and 40 parts by mass or less, or 15 parts by mass or more and 30 parts by mass or less, per 100 parts by mass of the ethylene-α-olefin-based copolymer rubber.

The rubber composition can be obtained, for example, by kneading a mixture of the ethylene-α-olefin-based copolymer rubber and other components. Kneading can be performed using a closed kneader such as a mixer, kneader, and twin-screw extruder. Kneading can be performed until the components are each uniformly mixed. The kneading time may be 1 minute or more and 60 minutes or less. The kneading temperature may be 40°C or more and 200°C or less. An oil-extended rubber, which is obtained by mixing the ethylene-α-olefin-based copolymer rubber and a process oil such as a paraffin-based oil and a naphthene-based oil, may be used for production of the rubber composition.

Molded Metal/Rubber Composite

Figure 1 is a cross-sectional view showing an embodiment of a molded metal/rubber composite. A molded metal-rubber 5 shown in Figure 1 comprises a metal member 1 and a molded rubber 3 directly bonded to the metal member 1. The molded rubber 3 includes a vulcanized product of the rubber composition according to the aforementioned embodiment. The molded rubber 3 is directly bonded on the surface of the metal member 1 without via an adhesive. This molded rubber 3 can be obtained, for example, by a method comprising molding the rubber composition in a mold while in contact with a metal member 1 to form the molded rubber 3 directly bonded to the metal member 1 and vulcanizing the rubber composition. The rubber composition may be vulcanized while the molded rubber is molded under heating, or the molded rubber 3 is formed, and then, the rubber composition forming the molded rubber 3 may be vulcanized.

The rubber composition is, for example, molded in a mold by a molding machine such as an injection molding machine, compression molding machine, or hot air vulcanizing apparatus while heated at 120°C or more and 250°C or less, or 140°C or more and 220°C or less to enable a molded rubber to be formed, the molded rubber being bonded to the metal member as well as vulcanized. The molding time is, for example, 1 minute or more and 60 minutes or less.

A metal constituting the metal member is not particularly limited, and may be selected from a wind range of metals. The metal member may be a molded body of, for example, magnesium, calcium, barium, titanium, zirconium, iron, cobalt, beryllium, aluminum, chromium, manganese, nickel, copper, zinc, tin, cadmium, silver, platinum, gold, lead, or an alloy including a combination thereof. The metal member may be a molded body of iron, aluminum, magnesium, or an alloy including one or more of these. The metal member may be a molded body of iron, steel, stainless steel, or aluminum.

The molded metal/rubber composite can be used in various members, for example, rubber rolls, vibration-proof rubber for automobiles, and seismic isolation rubber for construction. The shape of the metal member and the molded rubber is not particularly limited and designed depending on applications.

**Examples**

Hereinbelow, the present invention will be described more specifically with reference to examples. However, the present invention is not limited to these examples.

1. Evaluation Method of Ethylene-α-olefin-based Copolymer Rubber

(1) Content of ethylene unit and content of propylene unit

An ethylene-α-olefin-based copolymer rubber was molded by a hot press machine to produce a film having a thickness of about 0.1 mm. The infrared absorption spectrum of this film was measured with an infrared spectrophotometer (IR-810 manufactured by JASCO Corporation). The content of the ethylene unit and the content of the propylene unit was obtained from the obtained infrared absorption spectrum in accordance with a method described in reference literatures (Characterization of Polyethylene by Infrared Absorption Spectrum by Takayama, Usami, et al., and Die Makromolekulare Chemie, 177, 461 (1976) by Mc Rae, M.A., Maddam S, W.F., et al.).

(2) Iodine value

Three types of ethylene-propylene-5-ethylidene-2-norbornene copolymer rubbers having a different iodine value in compliance with "JIS K0070-1992 6. Iodine Value" were each molded by a hot press machine to produce a film having a thickness of about 0.2 mm. The infrared absorption spectrum of each film was measured by an infrared spectrophotometer (IR-700 manufactured by JASCO Corporation). The transmittances of a peak derived from 5-ethylidene-2-norbornene (absorption peak at 1686 $cm^{-1}$) and a base peak (absorption peak at 1664 to 1674 $cm^{-1}$) for each film were obtained from the obtained infrared absorption spectrum, and the IR index was calculated by the following expression (I). A is the transmittance of the base peak, B is the transmittance of the peak derived from 5-ethylidene-2-norbornene,

and D (mm) is the thickness of the film.

$$\text{IR index} = \text{Log}(A/B)/D \text{ ... Expression (I)}$$

A calibration curve of the iodine values represented by the following expression (II) was obtained from the IR index and the above-described known iodine values. $\alpha$ and $\beta$ in the expression (II) are each a constant.

$$\text{Iodine value} = \alpha \times \text{IR index} + \beta \text{ ... Expression (II)}$$

The IR index of a film obtained by molding the ethylene-$\alpha$-olefin-based copolymer rubber was measured, and the iodine value of the ethylene-$\alpha$-olefin-based copolymer rubber was determined from the value and the above-described calibration curve.

(3) Molecular weight distribution

The values of the weight average molecular weight (Mw) and the number average molecular weight (Mn) of the copolymer rubber in terms of standard polystyrene were measured under the following conditions by a gel permeation chromatography (GPC) method.

- GPC apparatus: trade name HLC-8121GPC/HT manufactured by Tosoh Corporation
- Column: trade name TSKgel GMHHR-H(S)HT manufactured by Tosoh Corporation
- Molecular weight standard substance: polystyrene of which molecular weight is 500 or more and 20000000 or less
- Elution solvent flow rate: 1.0 mL/min
- Sample concentration:1 mg/mL
- Measurement temperature: 140°C
- Elution solvent: orthodichlorobenzene
- Amount to be injected: 500 $\mu$L
- Detector: differential refractometer

2. Preparation of Rubber Composition and Evaluation Thereof

The following raw materials were provided.

(A) Ethylene-$\alpha$-olefin-based copolymer rubber

- EPDM-1: ethylene-propylene-5-ethylidene-2-norbornene copolymer rubber having the following characteristics
  Content of the ethylene unit: 50% by mass
  Content of propylene unit: 40.5% by mass
  Iodine value: 21
  Molecular weight distribution: 5.5
- EPDM-2: ethylene-propylene-5-ethylidene-2-norbornene copolymer rubber having the following characteristics
  Content of ethylene unit: 52% by mass
  Content of propylene unit: 44% by mass
  Iodine value: 10
  Molecular weight distribution: 3.4

(B) Silane coupling agent comprising a sulfur atom

- Si75 (trade name): bis(3-triethoxysilylpropyl)disulfide manufactured by Evonik Degussa Corporation
- Si69 (trade name): bis(3-triethoxysilylpropyl)tetrasulfide manufactured by Evonik Degussa Corporation

(C) Vulcanizing agent

- Sulfur: trade name "GOLDEN FLOWER" SULFUR POWDER 200 mesh" manufactured by Tsurumi Chemical Industry, Co., ltd.

Others

- Zinc acrylate: trade name "ZDA-90" manufactured by ASADA CHEMICAL INDUSTRY CO., LTD.
- Dynasylan MEMO (trade name): 3-(methacryloyloxyethyl)propyltrimethoxysilane manufactured by Evonik Degussa Corporation
- Carbon black: trade name "Asahi 60UG" manufactured by Asahi Carbon Co., Ltd.
- Paraffin oil: trade name "Diana PW380" manufactured by Idemitsu Kosan Co., Ltd.
- Zinc oxide: trade name "Zinc Oxide II" manufactured by SEIDO CHEMICAL INDUSTRY CO., LTD.
- Stearic acid: trade name "STEARIC ACID 50S" manufactured by New Japan Chemical Co., Ltd.
- Zinc di-n-butyldithiocarbamate: trade name "Rhenogran ZDBC-80" manufactured by Rhein Chemie Corporation
- Tetramethylthiuram disulfide: trade name Rhenogran TMTD-80 manufactured by Rhein Chemie Corporation
- Dipentamethylenethiuram tetrasulfide: trade name "Rhenogran DPTT-70" manufactured by Rhein Chemie Corporation
- 2-Mercaptobenzothiazole: trade name "Rhenogran MBT-80" manufactured by Rhein Chemie Corporation

Example 1

Preparation of rubber composition

Kneaded were 100 parts by mass of EPDM-1, 3 parts by mass of a silane coupling agent containing a sulfur atom (Si75), and the following additives as other components for 4 minutes at a rotor revolution number of 80 rpm by use of a 1700 mL Banbury mixer (manufactured by Kobe Steel, Ltd.) adjusted at a start temperature of 70°C.

Other components:

- Carbon black: 100 parts by mass
- Paraffin oil: 50 parts by mass
- Zinc oxide: 5 parts by mass
- Stearic acid: 1 part by mass

Kneaded were 259 parts by mass of the kneaded product obtained, 3 parts by mass of sulfur, 2.5 parts by mass of zinc di-n-butyldithiocarbamate, 0.63 parts by mass of tetramethylthiuram disulfide, 0.71 parts by mass of dipentamethylenethiuram tetrasulfide, and 1.25 parts by mass of 2-mercaptobenzothiazole by use of an 8-inch open roll (manufactured by KANSAI ROLL Co., Ltd.) at a roll temperature of 40°C to obtain a rubber composition.

Production of molded metal/rubber composite

In order to produce a molded metal/rubber composite, the following metal member was provided.

- Steel sheet: SS400 (length 60 mm, width 25 mm, sheet thickness 2.0 mm)
- Stainless steel sheet: SUS304 (length 60 mm, width 25 mm, sheet thickness 2.0 mm)
- Aluminum sheet: pure aluminum sheet (purity 99.5%, length 60 mm, width 25 mm, sheet thickness 3.0 mm)

The rubber composition obtained was placed on the steel sheet in the mold, and heated and compressed under this state for 30 minutes by use of a 100-ton press (trade name: PSF-B010 manufactured by KANSAI ROLL Co., Ltd.) set at 170°C with the press surface of the press machine pressed onto the rubber composition. This formed a metal/rubber composite member (total thickness: 8 mm) consisting of the steel sheet and a sheet-like molded rubber (length 125 mm,

width 25 mm, thickness: 6 mm) directly vulcanization bonded to the steel sheet surface. Adhesion of the rubber to the press surface of the press machine was prevented by laying a Teflon (R) sheet between the press surface of the press machine and the rubber composition.

Evaluation of molded metal/rubber composite

The molded metal/rubber composite obtained was used to measure the adhesiveness of the molded rubber to the steel sheet in compliance with JIS K 6256-2. As for delamination states shown in Table 1 and Table 2, "R" means material failure in which the molded rubber is broken, and "D" means interfacial delamination.

Examples 2 to 5 and Comparative Examples 1 to 7

A rubber composition and a molded metal/rubber composite were produced and evaluation thereof was performed in the same manner as in Example 1 except that the type of each component, the blending ratio thereof, and the metal member were changed as shown in Table 1 or Table 2. The blending ratios in the tables are expressed in parts by mass. The type of components and the blending ratio thereof not indicated in the tables are common in all the Examples and Comparative Examples.

Table 1

| | | Ex. 1 | Ex. 2 | Ex. 3 | Ex. 4 | Ex. 5 | Ex. 6 | Ex. 7 | Ex. 8 |
|---|---|---|---|---|---|---|---|---|---|
| (A) | EPDM-1 | 100 | 100 | 100 | 100 | 100 | - | 100 | 100 |
| | EPDM-2 | - | - | - | - | - | 100 | - | - |
| (B) | Si75 | 3 | 5 | 10 | - | - | 5 | 5 | 5 |
| | Si69 | - | - | - | 5 | 10 | - | - | - |
| (C) | Sulfur | 3 | 3 | 3 | 3 | 3 | 3 | 3 | 3 |
| Metal member | | SS400 | SS400 | SS400 | SS400 | SS400 | SS400 | SUS304 | Pure aluminum sheet |
| Adhesiveness | Adhesive strength [N/mm] | 5.0 | 9.9 | 5.4 | 7.6 | 5.9 | 9.1 | 5.4 | 6.4 |
| | Delamination state | R | R | R | R | R | R | R | R |

Table 2

| | | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 |
|---|---|---|---|---|---|---|---|---|---|
| (A) | EPDM-1 | 100 | 100 | 100 | 100 | 100 | 100 | 100 | 100 |
| | EPDM-2 | - | - | - | - | - | - | - | - |
| (B) | Si75 | - | 1 | 2.4 | - | 20 | 10 | - | - |
| | Si69 | - | - | - | 2.4 | - | - | - | - |
| Zinc acrylate | | - | - | - | - | - | - | 10 | - |
| Dynasylan MEMO | | - | - | - | - | - | - | - | 10 |
| (C) | Sulfur | 3 | 3 | 3 | 3 | 3 | - | 3 | 3 |
| Metal member | | SS400 | SS400 | SS400 | SS400 | SS400 | SS400 | SS400 | SS400 |

(continued)

| | | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 |
|---|---|---|---|---|---|---|---|---|---|
| Adhesiveness | Adhesive strength [N/mm] | 0 | 0.2 | 2.7 | 2.0 | 2.4 | 0 | 1.1 | 1.4 |
| | Delamination state | D | D | D | D | D | D | D | D |

It was confirmed that all the rubber compositions of Examples each formed a molded rubber having high adhesiveness to the metal member. In the cases of the rubber compositions of Comparative Examples 1 and 6, which lack a silane coupling agent containing a sulfur atom or sulfur, of the rubber compositions of Comparative Example 2 to 4, in which the content of the silane coupling agent containing a sulfur atom is less than 2.7 parts by mass, of the rubber composition of Comparative Example 5, in which the content of the silane coupling agent containing a sulfur atom exceeds 12 parts by mass, of the rubber composition of Comparative Example 7, which contains zinc acrylate, and of the rubber composition of Comparative Example 8, which contains Dynasylan MEMO, which is silane coupling agent containing no sulfur atom, the adhesiveness of the molded rubber to the metal was not sufficient.

## Claims

1. A rubber composition for direct vulcanization bonding, comprising:

    (A) an ethylene-α-olefin-based copolymer rubber comprising an ethylene unit and an α-olefin unit having 3 or more carbon atoms;
    (B) a silane coupling agent comprising a sulfur atom; and
    (C) a vulcanizing agent comprising sulfur, wherein

    a content of the silane coupling agent is 2.7 to 12 parts by mass per 100 parts by mass of the ethylene-α-olefin-based copolymer rubber, and
    the rubber composition is used for forming a molded rubber directly vulcanization bonded to a metal member.

2. The rubber composition for direct vulcanization bonding according to claim 1, wherein the silane coupling agent comprising a sulfur atom is represented by a following formula (1):

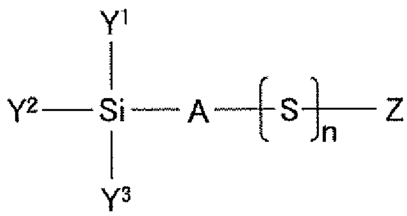

(1)

    wherein n represents a numerical value of 1 or more,

    $Y^1$, $Y^2$, and $Y^3$ each independently represent a hydrogen atom, a halogen atom, a hydroxyl group, an amino group, an alkoxy group optionally having a substituent, an alkyl group optionally having a substituent, an alkenyl group optionally having a substituent, an alkynyl group optionally having a substituent, an aryl group optionally having a substituent, or an aralkyl group optionally having a substituent,
    A represents a linear or branched alkylene group, and
    Z represents a group represented by a formula: $-A-SiY^1Y^2Y^3$ (where A, $Y^1$, $Y^2$, and $Y^3$ are defined as above), a hydrogen atom, a halogen atom, a formyl group, an acyl group, a carboxy group, an amino group, a nitro group, an imidazole group, a sulfo group, an alkyl group optionally having a substituent, an alkenyl group optionally having a substituent, an alkynyl group optionally having a substituent, an aryl group optionally having

a substituent, or an aralkyl group optionally having a substituent.

**3.** The rubber composition for direct vulcanization bonding according to claim 1 or 2, wherein a content of the sulfur is 10 parts by mass or less per 100 parts by mass of the ethylene-α-olefin-based copolymer rubber.

**4.** A molded metal/rubber composite comprising:

a metal member; and
a molded rubber directly bonded to the metal member and including a vulcanized product of the rubber composition according to any one of claims 1 to 3.

**5.** The molded metal/rubber composite according to claim 4, wherein the metal member is a molded body of iron, aluminum, magnesium, or an alloy including one or more of these.

**6.** A method for producing a molded metal/rubber composite, comprising:

molding the rubber composition according to any one of claims 1 to 3 while in contact with a metal member to form a molded rubber directly bonded to the metal member; and
vulcanizing the rubber composition.

**7.** The method for producing a molded metal/rubber composite according to claim 6, wherein the metal member is a molded body of iron, aluminum, magnesium, or an alloy including one or more of these.

Fig.1

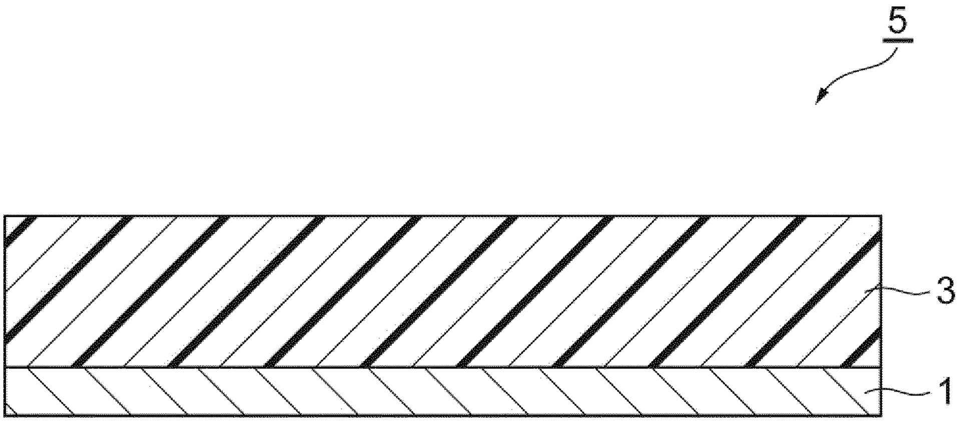

**INTERNATIONAL SEARCH REPORT**

International application No.
PCT/JP2018/018761

A. CLASSIFICATION OF SUBJECT MATTER
Int.Cl. C08L23/08(2006.01)i, B32B15/06(2006.01)i, B32B25/04(2006.01)i, C08K3/06(2006.01)i, C08K5/548(2006.01)i

According to International Patent Classification (IPC) or to both national classification and IPC

B. FIELDS SEARCHED

Minimum documentation searched (classification system followed by classification symbols)
Int.Cl. C08L23/08, B32B15/06, B32B25/04, C08K3/06, C08K5/548

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| A | JP 7-278321 A (SUMITOMO CHEMICAL INDUSTRY COMPANY LIMITED) 24 October 1995 (Family: none) | 1-7 |
| A | JP 5-311008 A (SUMITOMO CHEMICAL INDUSTRY COMPANY LIMITED) 22 November 1993 & EP 570159 A1 | 1-7 |
| A | JP 11-181149 A (BRIDGESTONE CORPORATION) 06 July 1999 (Family: none) | 1-7 |
| A | JP 59-073944 A (BRIDGESTONE TIRE CO., LTD.) 26 April 1984 (Family: none) | 1-7 |
| A | JP 57-137330 A (BANDO CHEMICAL INDUSTRIES, LTD.) 24 August 1982 (Family: none) | 1-7 |
| A | JP 2012-177068 A (MITSUBOSHI BELTING LTD.) 13 September 2012 (Family: none) | 1-7 |

☐ Further documents are listed in the continuation of Box C.    ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 June 2018 (06.06.2018) | 14 August 2018 (14.08.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H11505879 B
- JP H5311008 B


### Non-patent literature cited in the description


- Mutual Adhesion of Rubber with Metals. *Journal of the Chemistry Society of Japan,* 1970, vol. 73 (1), 54
- **TAKAYAMA, USAMI.** *Characterization of Polyethylene by Infrared Absorption Spectrum*
- **MC RAE, M.A. ; MADDAM S, W.F.** *Die Makromolekulare Chemie,* 1976, vol. 177, 461